# EUROPEAN PATENT APPLICATION

(11) **EP 4 434 402 A1**
(43) Date of publication of application: **25.09.2024**
(21) Application number: 22894730.5
(22) Date of filing: 11.11.2022
(51) Int. Cl.: A47C 1/12, A47C 1/00, A47C 7/40, A47C 7/42

(54) **VIBRATING SEAT**

(30) Priority: 19.11.2021 CN 202122857421 U
(71) Applicant: Beijing Chehejia Automobile Technology Co., Ltd., Beijing 101300 (CN)
(72) Inventor: HUANG, Hao, Beijing 101300 (CN); AN, Yupu, Beijing 101300 (CN)
(74) Representative: advotec.
(86) International application number: PCT/CN2022/131491
(87) International publication number: WO 2023/088194

(57) **Abstract**

A vibration seat includes: a seat body (10); a fixed suspension spring (20) mounted to the seat body (10); and a vibration module (30). One of the vibration module (30) and the fixed suspension spring (20) includes an engaging protrusion (40), and the other one of the vibration module (30) and the fixed suspension spring (20) includes an engaging hole (311). The engaging protrusion (40) is engaged with the engaging hole (311).

## Description

### CROSS-REFERENCE TO RELATED DISCLOSURE

This application is based on and claims priority to Chinese Patent Disclosure No. 202122857421.4, filed on November 19, 2021, the entire content of which is incorporated herein by reference.

### FIELD

The present disclosure relates to the field of seats, and more particularly to a vibration seat.

### BACKGROUND

With the continuous improvement of living standards, the demand of people for entertainment facilities is becoming higher and higher. Currently, 4D seats are widely used for cinemas, game halls and other entertainment places, and are an important part thereof. In the 4D seat, a vibration module is arranged on the seat to drive the seat to vibrate, so as to simulate the wind, water and other effects in the entertainment scene and the common vibration, falling and other phenomena in life, and cooperate with the plots in movies or game screens through a control system, so that the audience has an immersive feeling. In the vibration seat in the related art, the detachment and installation operations of the vibration module in the disassembling and assembling processes of the vibration module and the seat are very troublesome, which is not conducive to later maintenance.

### SUMMARY

The main purpose of the present disclosure is to provide a vibration seat, which is intended to facilitate its maintenance.

In order to achieve the above purpose, the vibration seat proposed in the present disclosure includes: a seat body; a fixed suspension spring mounted to the seat body; and a vibration module. One of the vibration module and the fixed suspension spring include an engaging protrusion, the other one of the vibration module and the fixed suspension spring comprises an engaging hole, and the engaging protrusion is engaged with the engaging hole.

In some embodiments, the engaging protrusion includes a connecting section and an elastic engaging section connected with each other, and the elastic engaging section and the connecting section is arranged in an included angle, so that an elastic gap is formed between the elastic engaging section and the connecting section, and the elastic engaging section is configured to be compressed by a hole wall of the engaging hole to reduce the elastic gap and to pass through the engaging hole.

In some embodiments, the engaging protrusion includes two elastic engaging sections arranged on two opposite sides of the connecting section, respectively.

In some embodiments, an arc surface is arranged at a peripheral edge of one of ends of the connecting section, and an end of the elastic engaging section is transitionally connected with the connecting section through the arc surface.

In some embodiments, the connecting section has a first end and a second end, the first end is connected with an end of the elastic engaging section, the second end is connected with a base, and the base is connected with the fixed suspension spring.

In some embodiments, the connecting section, the elastic engaging section and the base are an integrally injection-molded structure.

In some embodiments, a lateral edge of the vibration module is provided with a connecting lug plate having a first surface and a second surface opposite to each other, the engaging hole runs through the first surface and the second surface, and the engaging protrusion passes through the engaging hole from the first surface and is configured to be engaged at the second surface.

In some embodiments, the vibration module has a strip shape and has two opposite long side edges, and each long side edge is provided with one connecting lug plate adjacent to either end of the long side edge.

In some embodiments, the vibration module includes a housing and a vibration body, the housing is a shell cavity structure made of metal materials or plastic materials, the vibration body is installed in the cavity of the housing, and the connecting lug plate and the housing are integrally formed by injection molding or integrally formed by mechanical processing.

In some embodiments, the fixed suspension spring includes a plurality of transverse ribs arranged side by side, adjacent two transverse ribs are spaced apart, and at least two transverse ribs are provided with the engaging protrusion, respectively.

In some embodiments, the fixed suspension spring further includes at least two longitudinal ribs, and the at least two longitudinal ribs are distributed along a length direction of the transverse rib and connected with the transverse rib, so that the plurality of transverse ribs and the at least two longitudinal ribs form a mesh-like structure.

In some embodiments, the plurality of transverse ribs include a first transverse rib, a second transverse rib and a third transverse rib arranged adjacent to each other in sequence, and the first transverse rib and the third transverse rib are provided with the engaging protrusion, respectively.

In some embodiments, the transverse rib is bent and has a convex part and a concave part, the convex part and the concave part are alternately distributed along the length direction of the transverse rib, and in the same transverse rib, adjacent two concave parts are each provided with one engaging protrusion.

In some embodiments, the engaging protrusion is a plastic part, the fixed suspension spring is a metal part, and the engaging protrusion and the fixed suspension spring are integrally inj ection-molded.

In some embodiments, the seat body includes a seat cushion and a backrest connected with each other, and the fixed suspension spring is arranged to the backrest.

In the embodiments of the present disclosure, the vibration module and the fixed suspension spring of the seat body are fixed together by means of engaging, to prevent the separation of the vibration module from the fixed suspension spring. On the one hand, the way of engaging makes the connection between the vibration module and the fixed suspension spring stable. On the other hand, when the vibration module needs to be detached, it only needs to apply a force and pull the vibration module out, and the engaging protrusion is separated from the engaging hole. Therefore, the installation and fixing of the vibration module in the embodiments of the present disclosure are stable, and also the detachment and installation of the vibration module are labor-saving, thus significantly facilitating the assembling and later maintenance of the vibration seat.

### BRIEF DESCRIPTION OF THE DRAWINGS

In order to more clearly explain the technical solution in the embodiments of the present disclosure, the accompanying drawings required to be used in the embodiments will be briefly described below, and it is obvious that the accompanying drawings described below are only some embodiments of the present disclosure, and for those skilled in the art, other accompanying drawings can be obtained according to structures shown in these accompanying drawings without creative labors.
Fig. 1 is a schematic view of a backrest of a vibration seat according to an embodiment of the present disclosure.
Fig. 2 is another schematic view of a backrest of a vibration seat according to an embodiment of the present disclosure, in which only a cover plate of the vibration module is shown.
Fig. 3 is an exploded view of a fixed suspension spring and a vibration module of a vibration seat according to an embodiment of the present disclosure.
Fig. 4 is a detail enlarged view of the vibration module and an engaging protrusion in Fig. 3, in which the engaging protrusion and an engaging hole are separated.
Fig. 5 is a detail enlarged view of a vibration module and an engaging protrusion in Fig. 1, in which the engaging protrusion and an engaging hole are engaged.

### References signs:

| Sign | Name | Sign | Name |
|---|---|---|---|
| 10 | seat body | 312 | second surface |
| 11 | backrest | 32 | long side edge |
| 20 | fixed suspension spring | 33 | cover plate |
| 21 | transverse rib | 40 | engaging protrusion |
| 211 | concave part | 41 | connecting section |
| 212 | concave part | 411 | inclined surface |
| 22 | longitudinal rib | 42 | elastic engaging section |
| 30 | vibration module | 421 | third surface |
| 31 | connecting lug plate | 43 | base |
| 311 | engaging hole | | |

The realization of the purpose of the present disclosure, the functional characteristics and the advantages will be further explained with reference to the accompanying drawings in conjunction with embodiments.

### DETAILED DESCRIPTION

The technical solution in embodiments of the present disclosure will be described clearly and completely in combination with the accompanying drawings in the embodiments of the present disclosure. Obviously, the embodiments described are only part embodiments of the present disclosure, rather than all the embodiments. Based on the embodiments in the present disclosure, all the other embodiments obtained by those skilled in the art without creative works fall within the protection scope of the present disclosure.

It should be noted that all directional indications (such as up, down, left, right, front, rear...) in the embodiments of the present disclosure are only used to explain the relative position relationship and motion situation between components in a specific posture (as shown in the accompanying drawings), and if the specific posture changes, the directional indication will change accordingly.

In addition, the descriptions related to "first" and "second" in the present disclosure are only used for purpose of description, and cannot be understood as indicating or implying relative importance or implicitly indicating the number of indicated technical features. Therefore, the feature defined as "first" or "second" may explicitly or implicitly include at least one such feature. In addition, the technical solutions between various embodiments can be combined with each other, but only on the basis that those skilled in the art can achieve. When the combination of the technical solutions has contradiction or cannot be achieved, it should be considered that such combination of the technical solutions does not exist and is not within the protection scope required by the present disclosure.

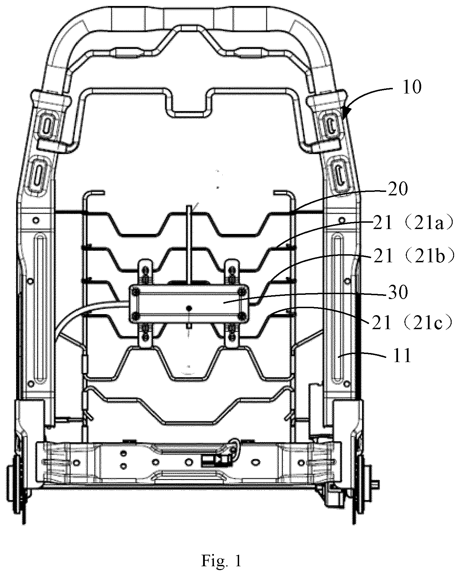

Referring to Fig. 1 to Fig. 5, the present disclosure proposes a vibration seat. In some embodiments, the vibration seat is a 4D vibration seat.

Referring to Fig. 1, in an embodiment of the present disclosure, the vibration seat includes a seat body 10, a fixed suspension spring 20 and a vibration module 30. The fixed suspension spring 20 is mounted to the seat body 10, and the vibration module 30 is mounted to the fixed suspension spring 20. The fixed suspension spring 20 has elasticity, and the vibration module 30 is capable of generating vibration, so as to drive the vibration module 30 to vibrate together.

Specifically, the seat body 10 may include a seat cushion and a backrest 11, the seat cushion includes a cushion frame and a cushion body, the backrest 11 includes a backrest frame and a backrest cushion, and the cushion frame and the backrest frame may be made of metal profiles or plastic materials. In the embodiments of the present disclosure, the backrest frame is made of metal profiles, so that the seat body 10 is firm and durable, and has a long service life. In some embodiments of the present disclosure, the cushion frame and the backrest frame are rotatably connected by a rotating shaft, the cushion body is laid on the cushion frame, and the backrest cushion is laid on the backrest frame. Under the action of an external force, the backrest frame may be rotated relative to the cushion frame and forms a specific angle with the cushion frame, so as to adapt to the sitting habits of different groups of people. In the embodiments of the present disclosure, the backrest frame may be rotated relative to the cushion frame manually or automatically. Specifically, in some embodiments of the present disclosure, an angle adjusting mechanism is arranged between the backrest frame and the cushion frame, and users drive the backrest frame to rotate relative to the cushion frame through the angle adjusting mechanism, so as to adapt to their own sitting habits.

In some embodiments of the present disclosure, the vibration module 30 is an audio vibration module 30, and includes a control circuit board, a converter, a voice coil, a vibration diaphragm, a magnet and a plug. The converter, the voice coil and the vibration diaphragm are arranged in a housing. The converter and the voice coil are electrically connected through a wire, and the voice coil is connected to a control circuit board through a terminal connecting wire. One end of the plug is bonded to a board surface of the control circuit board, and the other end of the plug is connected with a socket at a power supply end. A current flows to a side where the voice coil is through the plug and the control circuit board, the magnet generates a magnetic field to act on the voice coil, so as to drive the energized voice coil to generate vibration, and the voice coil drives the vibration diaphragm to vibrate.

Of course, in some other embodiments of the present disclosure, the vibration module 30 also may have a mechanical vibration mode, that is, the vibration module 30 includes a driving motor and a polarization rotor fitted over an output shaft of the driving motor, and the driving motor drives the polarization rotor to rotate, thus driving the seat body 10 to generate vibration.

In the embodiments of the present disclosure, the specific form and the specific structure of the vibration module 30 may be determined according to the actual situation, as long as it may drive the seat body 10 to generate vibration.

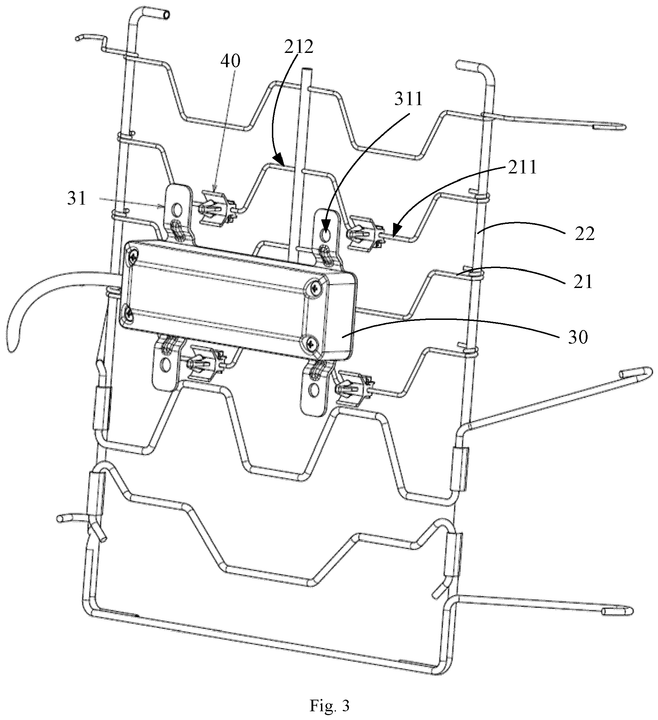

In some embodiments of the present disclosure, the fixed suspension spring 20 is made of metal materials, and the fixed suspension spring 20 is fixedly connected to the backrest frame. In some embodiments, the fixed suspension spring 20 is hung on the backrest frame by means of hanging. Referring to Fig. 3, for example, an end of part of transverse ribs 21 of the fixed suspension spring 20 is bent to form a hook and hung on the backrest frame. In some embodiments, one transverse rib 21 at a top of the fixed suspension spring 20, one transverse rib 21 in a middle of the fixed suspension spring 20, and one transverse rib 21 at a bottom of the fixed suspension spring 20 extend transversely to cross a longitudinal rib 22, and these extending parts are bent to form hooks and hung on the backrest framework. By being connected with the backrest frame through the three transverse ribs 21 (at the top, in the middle and at the bottom), the fixed suspension spring 20 forms connection points at three positions (at the top, in the middle, and at the bottom), and two ends and a middle portion of the fixed suspension spring 20 are fixed to the backrest frame, so that the fixed suspension spring 20 can be stably fixed, avoiding the fixed suspension spring 20 from being separated from the backrest frame during vibration.

In the actual assembling process, the vibration module 30 is arranged between the fixed suspension spring 20 and the backrest cushion, and two opposite surfaces of the housing of the vibration module 30 are attached to the fixed suspension spring 20 and the backrest cushion, respectively. When the vibration module 30 vibrates, the fixed suspension spring 20 is stretched and deformed by the housing, and vibrates back and forth along with the vibration module 30.

In the embodiments of the present disclosure, the vibration module 30 is arranged to the fixed suspension spring 20 on the backrest 11. In the actual use process, the vibration module 30 is capable of generating vibration along with the change of the scene, so as to vibrate a back of the user. Of course, the vibration module 30 may also be arranged to the seat cushion, or the seat cushion and the backrest 11 are each provided with the vibration module 30. In addition, the number of the vibration modules 30 may be one, two, five or more, and the number and the arrangement position of the vibration module 30 in the embodiments of the present disclosure are not specifically limited herein.

The detachment and installation processes of the traditional vibration module and seat, the detachment and installation operations are very troublesome, which is not conducive to later maintenance. For example, in some conventional manners, the vibration module 30 is fastened to the seat by a bolt, and the detachment and installation need to be carried out by other external tools, causing the detachment and installation operations to be very troublesome.

For this, in the embodiments of the present disclosure, one of the vibration module 30 and the fixed suspension spring 20 is provided with an engaging protrusion 40, the other one of the vibration module 30 and the fixed suspension spring 20 is provided with an engaging hole 311, and the engaging protrusion 40 is engaged with the engaging hole 311.

Specifically, in some embodiments, the vibration module 30 is provided with the engaging protrusion 40, and the fixed suspension spring 20 is provided with the engaging hole 311. In some embodiments, the vibration module 30 is provided with the engaging hole 311, and the fixed suspension spring 20 is provided with the engaging protrusion 40. In some embodiments, the vibration module 30 is provided with both the engaging protrusion 40 and the engaging hole 311, the fixed suspension spring 20 is also provided with both the engaging protrusion 40 and the engaging hole 311, the engaging protrusion 40 of the vibration module 30 is engaged with the engaging hole 311 of the fixed suspension spring 20, and the engaging hole 311 of the vibration module 30 is engaged with the engaging protrusion 40 of the fixed suspension spring 20.

In the embodiments of the present disclosure, the vibration module 30 and the fixed suspension spring 20 of the seat body 10 are fixed together by means of engaging, to prevent the separation of the vibration module 30 from the fixed suspension spring 20. On the one hand, the way of engaging makes the connection between the vibration module 30 and the fixed suspension spring 20 stable. On the other hand, when the vibration module 30 needs to be detached, it only needs to apply a force and pull the vibration module 30 out, and the engaging protrusion 40 is separated from the engaging hole 311. Therefore, the installation and fixing of the vibration module 30 in the embodiments of the present disclosure are stable, and also the detachment and installation of the vibration module 30 in the embodiments of the present disclosure are labor-saving, thus significantly facilitating the assembling and later maintenance of the vibration seat.

The embodiments of the present disclosure are further described in detail in conjunction with a specific implementation below.

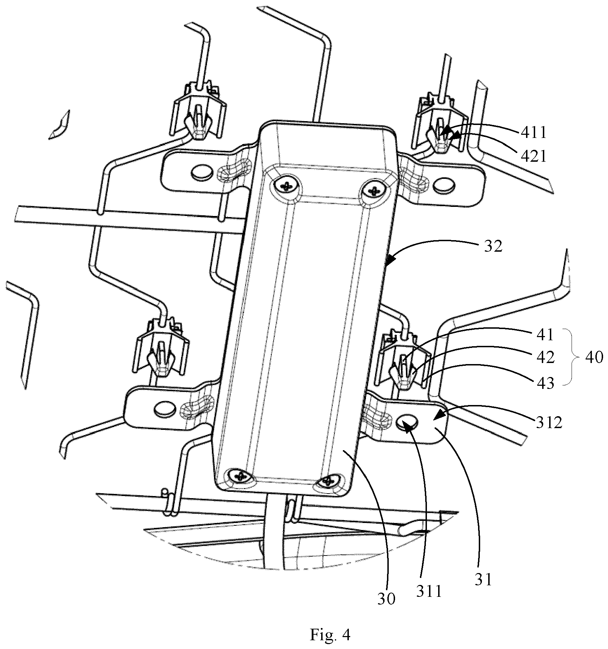

In the embodiments of the present disclosure, the engaging protrusion 40 has a plurality of kinds of structures. Referring to Fig. 3 and Fig. 4, for example, the engaging protrusion 40 includes a connecting section 41 and an elastic engaging section 42 connected with each other, the elastic engaging section 42 and the connecting section 41 is arranged in an included angle to form an elastic gap therebetween, and the elastic engaging section 42 may be compressed by a hole wall of the engaging hole 311 to reduce the elastic gap and thus passes through the engaging hole 311. For better explanation, in the following, an example is taken, in which the fixed suspension spring 20 is provided with the engaging protrusion 40, and the vibration module 30 is provided with the engaging hole 311. The vibration module 30 has a first surface (not shown) and a second surface 312 facing away from each other (i.e., opposite), the engaging hole 311 passes through the first surface and the second surface 312, and the engaging protrusion 40 passes through the engaging hole 311 from the first surface and is engaged at the second surface 312.

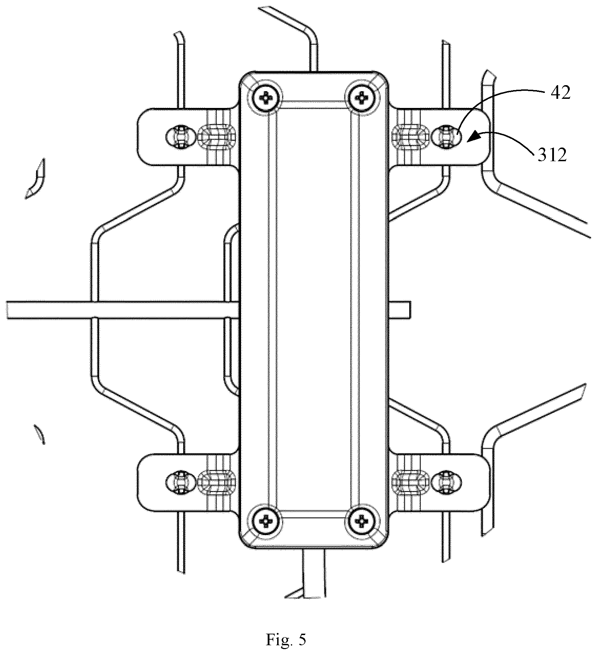

When specifically implemented, during assembling, the connecting section 41 and the elastic engaging section 42 of the engaging protrusion 40 extend from a side where the first surface is located into the engaging hole 311. In the process of pushing the engaging protrusion 40 into the engaging hole 311, the hole wall of the engaging hole 311 compresses the elastic engaging section 42, so that an end portion of a free end of the elastic engaging section 42 gradually draws close to the connecting section 41, i.e., an included angle between the elastic engaging section 42 and the connecting section 41 gradually decreases. At the same time, the elastic gap is gradually reduced, i.e., the elastic engaging section 42 and the connecting section 41 gradually furl, thus ensuring that the elastic engaging section 42 can smoothly pass through the engaging hole 311. When the elastic engaging section 42 completely passes through the engaging hole 311 and is located at a side where the second surface 312 is located, the elastic engaging section 42 recovers elastic deformation, and a maximum size formed by the combination of the elastic engaging section 42 and the connecting section 41 is greater than a diameter of the engaging hole 311. As shown in Fig. 5, the elastic engaging section 42 can abut against the second surface 312, so as to avoid the separation of the engaging protrusion 40 from the engaging hole 311, thus realizing the assembling of the vibration module 30 and the fixed suspension spring 20.

During disassembling, the elastic engaging section 42 and the connecting section 41 are compressed, so that the elastic engaging section 42 and the connecting section 41 gradually furl, and the included angle between the elastic engaging section 42 and the connecting section 41 is gradually reduced, until the end portion of the free end of the elastic engaging section 42 extends into the engaging hole 311, and then the engaging protrusion 40 is pulled in a direction of the second surface 312 pointing to the first surface to separate the engaging protrusion 40 from the engaging hole 311.

In the above embodiment, the elastic engaging section 42 has the free end and a connecting end, and the connecting end is connected with the connecting section 41.

Further, the engaging protrusion 40 includes two elastic engaging sections 42 arranged on two opposite sides of the connecting section 41, respectively. In some embodiments, the elastic engaging section 42 and the connecting section 41 are arranged in an acute angle. In the embodiments of the present disclosure, the two elastic engaging sections 42 and the connecting section 41 form an arrow shape. During assembling, the arrow-shaped engaging protrusions 40 can be smoothly inserted into the engaging hole 311. During disassembling, by compressing the two elastic engaging sections 42, the engaging protrusion 40 can be smoothly separated from the engaging hole 311.

In some embodiments of the present disclosure, the engaging hole 311 is a circular hole. In the process of the elastic engaging section 42 passing through the engaging hole 311, in order to ensure the smooth fit between the elastic engaging section 42 and the engaging hole 311, in some embodiments, the elastic engaging section 42 has a third surface 421 facing away from the connecting section 41, and the third surface 421 is an externally convex arc-shaped surface. The arc-shaped surface is matched with the shape of the hole wall of the engaging hole 311, i.e. radians of the two are the same.

In some embodiments of the present disclosure, the connecting section 41 has a flat strip shape, the elastic engaging section 42 has a semi-cylindrical shape, ends of the connecting section 41 and the elastic engaging section 42 where they are connected with each other are hemispherical to have a smooth spherical-shell-shaped end, so as to be smoothly inserted into the engaging hole 311.

Further, the connecting section 41 has a fourth surface (not shown) and a fifth surface (not shown), the fourth surface faces the elastic engaging section 42, and the fifth surface and the fourth surface are adjacent and extend along the same side, i.e. extending along an opening direction of the engaging hole 311. The fifth surface has an inclined surface 411, one side of the inclined surface 411 is connected with the elastic engaging section 42, and the opposite other side of the inclined surface 411 is inclined outwards, so that an end portion of an end of the connecting section 41 connected with the elastic engaging section 42 is narrow. During assembling, it is convenient for the narrow end to extend into the engaging hole 311 from the first surface, and thus the inclined surface 411 plays a role of guiding.

Further, an arc surface is arranged at a peripheral edge of one of ends of the connecting section 41 (not shown), and an end of the elastic engaging section 42 is transitionally connected with the connecting section 41 through the arc surface. Specifically, the connecting section 41 has a first end (not shown) and a second end (not shown), the first end is connected with the end of the elastic engaging section 42, the second end is connected with a base 43, and the base 43 is connected with the fixed suspension spring 20. The arc surface is arranged at the peripheral edge of the first end, and the transition connection with the elastic engaging section 42 is achieved through the arc surface, so that the connection between the connecting section 41 and the elastic engaging section 42 is a smooth connection. During assembling, the ends of the connecting section 41 and the elastic engaging section 42 can smoothly slide into the engaging hole 311.

In the embodiments of the present disclosure, the engaging protrusion 40 is a plastic part. Therefore, the connecting section 41, the two elastic engaging sections 42 and the base 43 are an integrally injection-molded structure, and the connecting section 41, the two elastic engaging sections 42 and the base 43 form a whole after the injection molding material solidifies, thus avoiding a secondary connection between the connecting section 41, the two elastic engaging sections 42 and the base 43, and avoiding the situation that the connecting section 41, the two elastic engaging sections 42 and the base 43 are separated or broken.

In some embodiments, the engaging protrusion 40 includes a strip section and a hemispherical structure arranged at an end of the strip section, for example, the two form a shape of a mushroom head.

In some embodiments of the present disclosure, the engaging protrusion 40 is V-shaped.

Further, a lateral edge of the vibration module 30 is provided with a connecting lug plate 31, the connecting lug plate 31 has the first surface and the second surface 312 opposite to each other, the engaging hole 311 runs through the first surface and the second surface 312, and the engaging protrusion 40 passes through the engaging hole 311 from the first surface and is capable of being engaged at the second surface 312.

In order to ensure that the vibration module 30 can be stably mounted to the fixed suspension spring 20 and to avoid detachment of the two due to the generation of vibration, in some embodiments of the present disclosure, a plurality of connecting lug plates 31 are arranged to the lateral edge of the vibration module 30 and spaced apart along a circumferential direction of the vibration module 30. In some embodiments of the present disclosure, the vibration module 30 has a strip shape having two opposite long side edges 32, and each long side edge 32 is provided with one connecting lug plate 31 close to either end of the long side edge 32. Therefore, four engaging protrusions 40 and four engaging holes 311 fix four ends of the vibration module 30 to the fixed suspension spring 20, realizing the reliable fixing of the vibration module 30 and the fixed suspension spring 20. At the same time, the long side edge 32 of the vibration module 30 is provided with the connecting lug plate 31, so that the vibration module 30 is fixed in its length direction, a reliable fixing position may be formed, and the shaking of the vibration module 30 relative to the fixed suspension spring 20 is greatly reduced, thus avoiding the separation of the vibration module 30 from the fixed suspension spring 20. In addition, the long side edge 32 of the vibration module 30 extends along a length direction of the transverse rib 21 of the fixed suspension spring 20, and accordingly, a short side edge of the vibration module 30 extends along a length direction of the longitudinal rib 22 of the fixed suspension spring 20.

In the embodiments of the present disclosure, each connecting lug plate 31 is provided with one engaging hole 311, and the fixed suspension spring 20 is provided with one engaging protrusion 40 corresponding to each engaging hole 311. The fixed suspension spring 20 and the vibration module 30 are limited and fixed in a plurality of directions by a plurality of engaging protrusions 40 and a plurality of engaging holes 311, so that the connection of the vibration module 30 is stable.

In some embodiments of the present disclosure, the connecting lug plate 31 and the vibration module 30 are an integrally formed structure. Specifically, in the present disclosure, the vibration module 30 includes the housing and a vibration body, the housing is a shell cavity structure made of metal materials or plastic materials, the vibration body is installed in the cavity of the housing, and the connecting lug plate 31 and the housing may be integrally formed by injection molding or integrally formed by mechanical processing. In the embodiments of the present disclosure, the connecting lug plate 31 and the housing are integrally formed, so that the structure of the vibration module 30 is simply, and the assembling process is simplified. The connecting lug plate 31 is connected with the vibration module 30 and the fixed suspension spring 20, respectively, and also is subjected to the pull of the vibration module 30 and the fixed suspension spring 20 to move back and forth. Therefore, in order to avoid the deformation of the connecting lug plate 31 under forces, in some embodiments, the connecting lug plate 31 is a metal plate, a side of the connecting lug plate 31 close to the vibration module 30 is bent to form a structure of a concave-convex rib, and the structure of the concave-convex rib has an effect of a reinforcing rib, so that the strength of the connecting lug plate 31 is further strengthened. The connecting lug plate 31 includes, but is not limited to, one of a galvanized plate, a galvanized alloy plate, a pattern steel plate, and a profiled steel plate.

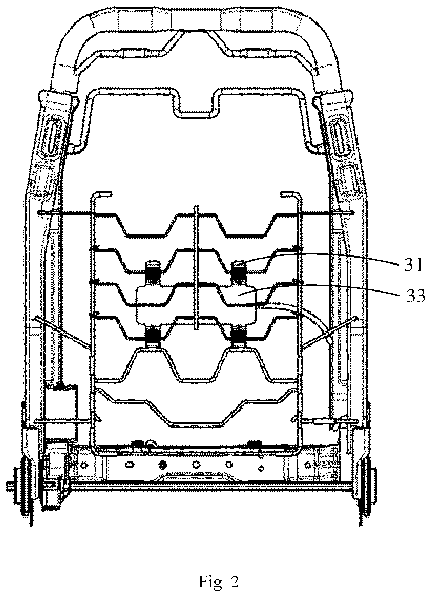

Referring to Fig. 2, in some embodiments of the present disclosure, the housing includes a bottom housing and a cover plate 33, the bottom housing forms a cavity structure and has an opening, and the cover plate 33 is arranged to cover the opening. The cover plate 33 and the bottom housing may be fixed by means of a screw or a buckle. The connecting lug plate 31 is arranged to the cover plate 33. In some embodiments, the connecting lug plate 31 and the cover plate 33 are both made of metal materials, and are an integrally formed structure.

Referring again to Fig. 3, in some embodiments of the present disclosure, the fixed suspension spring 20 includes a plurality of transverse ribs 21 longitudinally arranged and spaced apart in sequence, and adjacent two transverse ribs 21 are spaced apart.

Further, the fixed suspension spring 20 further includes at least two longitudinal ribs 22, the at least two longitudinal ribs 22 are distributed along the length direction of the transverse rib 21, and connected with the transverse rib 21. Thus, the plurality of transverse ribs 21 and the at least two longitudinal ribs 22 form a similar criss-cross mesh-like structure.

The longitudinal rib 22 serves as a frame of the fixed suspension spring 20, and the longitudinal rib 22 plays the role of installing and fixing the transverse rib 21. Thus, the longitudinal rib 22 is thicker, and its diameter is greater than a diameter of the transverse rib 21, so as to ensure the strength of the fixed suspension spring 20. The transverse rib 21 serves as a main body of the movement, and vibrates along with the vibration module 30. Thus, the transverse rib 21 is thinner, and its diameter is small, so as to ensure that the transverse rib 21 has a large elastic deformation, and can vibrate well along with the vibration module 30, so as to bring a good vibration experience to the user.

In some embodiments of the present disclosure, the fixed suspension spring 20 includes two longitudinal ribs 22 arranged on two ends of the transverse rib 21, respectively, and the end of the transverse rib 21 is bent and winded around the longitudinal rib 22, which is equivalent to hanging the end of the transverse rib 21 on the longitudinal rib 22, thus achieving the connection between the transverse rib 21 and the longitudinal rib 22.

In some embodiments of the present disclosure, the transverse rib 21 is bent in a plurality of sections, to form a concave part 211 and a convex part 212 in the length direction of the transverse rib 21, and the concave part 211 and the convex part 212 are alternately arranged in the length direction of the transverse rib 21. In some embodiments, along a longitudinal direction, the concave part 211 in part of the transverse ribs 21 corresponds to the concave parts 211 in other transverse ribs 21, and the convex part 212 in part of the transverse ribs 21 corresponds to the convex parts 212 in other transverse ribs 21. The concave parts 211 in some other transverse ribs 21 correspond to the convex parts 212 in the other transverse ribs 21, and the convex parts 212 in some other transverse ribs 21 correspond to the concave parts 211 in the other transverse ribs 21. In some other embodiments, the concave part 211 of any one of the transverse ribs 21 corresponds to the concave parts 211 of other transverse ribs 21, and the convex part 212 of any one of the transverse ribs 21 corresponds to the convex parts 212 of other transverse ribs 21. The correspondence in the embodiment refers to the position alignment in the length direction of the longitudinal rib 22, that is, in the same longitudinal direction.

In the embodiments of the present disclosure, the transverse rib 21 is bent in the plurality of sections, and after the concave part 211 and the convex part 212 are formed in the length direction of the transverse rib 21, the concave part 211 and the convex part 212 have a structural strengthening effect on the overall transverse rib 21, thus avoiding the fracture of the transverse rib 21.

Taking an up-down direction as an example, the concave part 211 refers to be recessed downwards, and the convex part 212 refers to be protruded upwards.

In some embodiments of the present disclosure, at least two transverse ribs 21 are provided with the engaging protrusion 40, respectively. In some embodiments, two transverse ribs 21 are provided with the engaging protrusion 40, respectively, and the two transverse ribs 21 provided with the engaging protrusion 40 are spaced apart by one transverse rib 21 therebetween. Specifically, the plurality of transverse ribs 21 include a first transverse rib 21a, a second transverse rib 21b and a third transverse rib 21c arranged adjacent to each other in sequence, and the first transverse rib 21a and the third transverse rib 21c are provided with the engaging protrusion 40, respectively. Since the at least two transverse ribs 21 are provided with the engaging protrusion 40, respectively, the vibration module 30 is simultaneously fixed to different transverse ribs 21, and the gravity of the vibration module 30 is dispersed to different transverse ribs 21, thus avoiding an excessive burden on the same transverse rib 21. At the same time, the vibration module 30 is connected with different transverse ribs 21 at a plurality of connection positions, so that the vibration module 30 may be well fixed, thus avoiding the separation of the vibration module 30 from the fixed suspension spring 20. In addition, the vibration module 30 is connected with the first transverse rib 21a and the third transverse rib 21c, and spans the second transverse rib 21b, so that the vibration module 30 has a large spanning area on the fixed suspension spring 20, and the contact area between the vibration module 30 and the fixed suspension spring 20 is large, thus resulting in a small vibration loss.

In some embodiments of the present disclosure, the engaging protrusion 40 is arranged to the concave part 211. Thus, the space of the concave part 211 may be fully used, and a height of the whole in the up-down direction is reduced. In some embodiments, in the same transverse rib 21, adjacent two concave parts 211 are each provided with one engaging protrusion 40.

In some embodiments of the present disclosure, the engaging protrusion 40 is a plastic part, the fixed suspension spring 20 is a metal part, and the engaging protrusion 40 and the fixed suspension spring 20 are integrally injection-molded. In the embodiments of the present disclosure, the engaging protrusion 40 may, but is not limited to, be made of plastic materials, rubber materials, etc., and is formed by injection molding process. For the injection molding connection with the fixed suspension spring 20, i.e., the connecting section 41, the elastic engaging section 42 and the base 43 of the engaging protrusion 40 are an integrally formed structure, the engaging protrusion 40 is injection-molding connected to the fixed suspension spring 20, the engaging protrusion 40 wraps the transverse rib 21 of the fixed suspension spring 20, and after the injection material is solidified, the engaging protrusion 40 and the fixed suspension spring 20 form a whole, thus avoiding the secondary connection between the engaging protrusion 40 and the fixed suspension spring 20, and avoiding the situation that the engaging protrusion 40 and the fixed suspension spring 20 are separated or broken. The fixed suspension spring 20 may, but is not limited to, be made of a stainless steel and a galvanized alloy. The transverse rib 21 and the longitudinal rib 22 of the fixed suspension spring 20 may be a circular strip-shaped structure.

In the present disclosure, unless otherwise specified and defined definitely, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure can be understood according to the specific situations.

In the present disclosure, unless otherwise specified and defined definitely, a first feature "on" or "under" a second feature may include an embodiment in which the first feature is in direct contact with the second feature, or the first feature is in indirect contact with the second feature through an intermediate media. And, the first feature "above", "on", or "on top of' the second feature may include an embodiment in which the first feature is right or obliquely "above", "on", or "on top of" the second feature, or just means that the first feature is at a height higher than the second feature. The first feature "below", "under", or "on bottom of' the second feature may include an embodiment in which the first feature is right or obliquely "below", "under", or "on bottom of' the second feature, or just means that the first feature is at a height lower than the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the above embodiments have been shown and described, it can be understood that the above embodiments are illustrative and shall not be understood as limitation to the present disclosure, and changes, modifications, alternatives and variations can be made in the above embodiments by those skilled in the art all fall within the protection scope of the present disclosure.

## Claims

1. A vibration seat, comprising:
a seat body;
a fixed suspension spring mounted to the seat body; and
a vibration module,
wherein one of the vibration module and the fixed suspension spring comprises an engaging protrusion, the other one of the vibration module and the fixed suspension spring comprises an engaging hole, and the engaging protrusion is engaged with the engaging hole.

2. The vibration seat according to claim 1, wherein the engaging protrusion comprises a connecting section and an elastic engaging section connected with each other, and the elastic engaging section and the connecting section are arranged in an included angle, so that an elastic gap is formed between the elastic engaging section and the connecting section, and the elastic engaging section is configured to be compressed by a hole wall of the engaging hole to reduce the elastic gap and to pass through the engaging hole.

3. The vibration seat according to claim 2, wherein the engaging protrusion comprises two elastic engaging sections arranged on two opposite sides of the connecting section, respectively.

4. The vibration seat according to claim 2 or 3, wherein an arc surface is arranged at a peripheral edge of one of ends of the connecting section, and an end of the elastic engaging section is transitionally connected with the connecting section through the arc surface.

5. The vibration seat according to any one of claims 2 to 4, wherein the connecting section has a first end and a second end, the first end is connected with an end of the elastic engaging section, the second end is connected with a base, and the base is connected with the fixed suspension spring.

6. The vibration seat according to claim 5, wherein the connecting section, the elastic engaging section and the base are an integrally injection-molded structure.

7. The vibration seat according to any one of claims 1 to 6, wherein a lateral edge of the vibration module is provided with a connecting lug plate having a first surface and a second surface opposite to each other, the engaging hole runs through the first surface and the second surface, and the engaging protrusion passes through the engaging hole from the first surface and is configured to be engaged at the second surface.

8. The vibration seat according to claim 7, wherein the vibration module has a strip shape and has two opposite long side edges, and each long side edge is provided with one connecting lug plate adjacent to either end of the long side edge.

9. The vibration seat according to claim 8, wherein the vibration module comprises a housing and a vibration body, the housing is a shell cavity structure made of metal materials or plastic materials, the vibration body is installed in the cavity of the housing, and the connecting lug plate and the housing are integrally formed by injection molding or integrally formed by mechanical processing.

10. The vibration seat according to any one of claims 1 to 9, wherein the fixed suspension spring comprises a plurality of transverse ribs arranged in sequence, adjacent two transverse ribs are spaced apart, and at least two transverse ribs are provided with the engaging protrusion, respectively.

11. The vibration seat according to claim 10, wherein the fixed suspension spring further comprises at least two longitudinal ribs, and the at least two longitudinal ribs are distributed along a length direction of the transverse rib, and connected with the transverse rib, so that the plurality of transverse ribs and the at least two longitudinal ribs form a mesh-like structure.

12. The vibration seat according to claim 10 or 11, wherein the plurality of transverse ribs comprise a first transverse rib, a second transverse rib and a third transverse rib arranged adjacent to each other in sequence, and the first transverse rib and the third transverse rib are provided with the engaging protrusion, respectively.

13. The vibration seat according to any one of claims 10 to 12, wherein the transverse rib is bent and has a convex part and a concave part, the convex part and the concave part are alternately distributed along a length direction of the transverse rib, and in the same transverse rib, adjacent two concave parts are each provided with one engaging protrusion.

14. The vibration seat according to any one of claims 1 to 13, wherein the engaging protrusion is a plastic part, the fixed suspension spring is a metal part, and the engaging protrusion and the fixed suspension spring are integrally injection-molded.

15. The vibration seat according to any one of claims 1 to 14, wherein the seat body comprises a seat cushion and a backrest connected with each other, and the fixed suspension spring is arranged to the backrest.
